# EUROPÄISCHE PATENTANMELDUNG

(11) **EP 3 248 727 A1**
(43) Veröffentlichungstag der Anmeldung: **29.11.2017**
(21) Anmeldenummer: 16170818.5
(22) Anmeldetag: 23.05.2016
(51) Int. Cl.: B23P 15/04, F01D 5/14, F01D 5/18, B22F 5/00

(54) **TURBINENSCHAUFEL UND VERFAHREN ZUR HERSTELLUNG DER TURBINENSCHAUFEL**

(71) Anmelder: Siemens Aktiengesellschaft, 80333 München (DE)
(72) Erfinder: Bärow, Stefan, 12623 Berlin (DE); Dominka, Oliver, 16515 Oranienburg (DE); Ederer, Guido, 13593 Berlin (DE); Felsmann, Christian, 16341 Panketal (DE); Fuchs, Florian, 12059 Berlin (DE); Herfurth, Robert, 13088 Berlin (DE); Hernandez Maza, Jose Angel, 10715 Berlin (DE); Kluck, Michael, 10551 Berlin (DE); Kohlhoff, Eike, 12161 Berlin (DE); Krabiell, Kay, 16562 Hohen Neuendorf (DE); Maiz, Khaled, 13355 Berlin (DE); Nouri, Behnam, 10627 Berlin (DE); Willmann, Andre, 16552 Schildow (DE)

(57) **Zusammenfassung**

Die Erfindung betrifft ein Verfahren zur Herstellung einer Turbinenschaufel (1), mit den Schritten:
Herstellen einer Schaufelhülle (2) der Turbinenschaufel (1), wobei die Schaufelhülle (2) einen Aufnahmeraum (3) der Turbinenschaufel (1) begrenzt,
Herstellen eines Einsetzteils (4) mit Kühlkanälen mittels additiver Fertigung, und
Einsetzen des Einsetzteils (4) in den Aufnahmeraum (3) und Verbinden des Einsetzteils (4) mit der Schaufelhülle (2).

## Beschreibung

Die Erfindung betrifft ein Verfahren zur Herstellung einer Turbinenschaufel. Ferner betrifft die Erfindung eine derartige Turbinenschaufel und eine Turbine mit einer derartigen Turbinenschaufel.

Turbinenschaufeln finden in Strömungsmaschinen Verwendung. Dabei wird unter einer Strömungsmaschine oder Turbomaschine eine Fluidenergiemaschine verstanden, bei der die Energieübertragung zwischen Fluid und Maschine in einem offenen Raum durch eine Strömung nach den Gesetzen der Fluiddynamik über den Umweg der kinetischen Energie erfolgt.

Eine derartige thermische Strömungsmaschine kann einen Verdichter oder eine Turbine aufweisen. Während ein Verdichter zum Komprimieren von Gasen verwendet wird, wie beispielsweise vor einer Brennkammer eines Strahltriebwerks, wird unter einer Turbine eine rotierende Strömungsmaschine verstanden, welche die innere Energie eines strömenden Fluides (Flüssigkeit oder Gas) in mechanische Energie umwandelt, die sie über ihre Rotorwelle abgibt.

Dem Fluidstrom wird in einer Turbine durch die möglichst wirbelfreie laminare Umströmung der Turbinenschaufeln ein Teil seiner inneren Energie (bestehend aus Bewegungs-, Lage- und Druckenergie) entzogen, der auf die Laufschaufeln der Turbine übergeht. Über diese wird dann die Rotorwelle in Drehung versetzt, die nutzbare Leistung wird an eine angekuppelte Arbeitsmaschine, wie beispielsweise an einen Generator, abgegeben.

Unter der Beschaufelung versteht man die Gesamtheit der Schaufeln einer Turbine oder eines Verdichters. Unterschieden wird dabei zwischen Laufschaufeln und Leitschaufeln. Ein Kranz von Laufschaufeln mit dem zugehörigen Kranz von Leitschaufeln nennt man eine Stufe. Die Beschaufelung von Turbinen oder Verdichtern kann mehrstufig sein.

Die Leitschaufeln sind fest im Gehäuse der Turbine eingebaut und leiten das Arbeitsmittel im optimalen Winkel auf die Laufschaufeln, die sich auf der drehbaren Rotorwelle befinden. Über die Laufschaufeln findet die Kopplung der mechanisch nutzbaren Leistung zwischen Maschine und Fluid statt.

Gerade Turbinenschaufeln unterliegen hohen thermischen Belastungen, da heiße Verbrennungsgase aus der Brennkammer auf sie treffen. Daher werden die Turbinenschaufeln gekühlt, beispielsweise in dem Kühlluft ins hohle Innere der Turbinenschaufel geblasen wird, die durch Austrittsöffnungen der Turbinenschaufel wieder austritt und sich als kühlender Luftstrom auf die Turbinenschaufeloberfläche legt.

Somit benötigen Turbinenschaufeln, wie Turbinenlauf und/oder -leitschaufeln, komplexe Innenstrukturen mit Kühlkanälen, um eine ausreichende Kühlung der Turbinenschaufel bei gleichzeitig geringem Kühlmittelverbrauch zu gewährleisten. Diese komplexen Innenstrukturen mit Kühlkanälen sind gusstechnisch schwer herzustellen, da die erforderlichen Gusskerne sehr filigran sind und deshalb leicht brechen können. Weiterhin sind diese schwer in Position zu halten, was Wandstärkeabweichungen zur Folge haben kann.

Daher weisen feingusstechnisch hergestellte Turbinenschaufeln beispielsweise einen eingeschränkten Grad an innerer Komplexität auf. Ferner werden Blecheinsätze im Inneren der Turbinenlaufschaufeln angeordnet, die den Kühlmittelstrom regulieren, während in Turbinenleitschaufeln Prallbleche eingesetzt werden, um die Kühlwirkung zu erhöhen.

Aufgabe der Erfindung ist es, Wege aufzuzeigen, wie Turbinenschaufeln mit komplexen Innenstrukturen, wie Kühlkanälen, leichter hergestellt werden können.

Die Aufgabe der Erfindung wird gelöst durch ein Verfahren zur Herstellung einer Turbinenschaufel, mit Schritten:
Herstellen einer Schaufelhülle der Turbinenschaufel, wobei die Schaufelhülle einen Aufnahmeraum der Turbinenschaufel begrenzt,
Herstellen eines Einsetzteils mit Kühlkanälen mittels additiver Fertigung, und
Einsetzen des Einsetzteils in den Aufnahmeraum und Verbinden des Einsetzteils mit der Schaufelhülle.

Unter additiver Fertigung (englisch: Additive Manufacturing - AM) werden dabei Fertigungsverfahren verstanden, bei denen auf der Basis von digitalen 3D-Konstruktionsdaten durch Ablagern von Material schichtweise ein Bauteil aufgebaut wird. Dies wird auch als 3D-Druck bezeichnet. Der Aufbau erfolgt computergesteuert aus einem oder mehreren flüssigen oder festen Werkstoffen nach vorgegebenen Maßen und Formen. Beim Aufbau finden physikalische und/oder chemische Härtungs- oder Schmelzprozesse statt. Der 3D-Druck ist ein generatives Fertigungsverfahren, nach dem Aufbauprinzip als additive Fertigung bezeichnet. Die wichtigsten Techniken des 3D-Druckens sind das selektive Laserschmelzen, das Elektronenstrahlschmelzen sowie das selektive Lasersintern für Metalle. So kann zuerst ein Einsetzteil mit der gewünschten Komplexität hergestellt und dann in die vorgefertigte Turbinenschaufel eingesetzt werden.

Bevorzugt ist die Schaufelhülle ein Gussteil, insbesondere ein Feingussteil. Ein Feingussteil ist ein mittels Feingießen (engl.: Investment casting) hergestelltes Bauteil, das es erlaubt, kleine und kleinste Teile formgetreu und bei minimierter Nachbearbeitung herzustellen, beispielsweise mit dem Wachsausschmelzverfahren. Die Gussstücke zeichnen sich durch Detailstärke, Maßgenauigkeit und Oberflächenqualität aus, so dass oftmals eine spanende Bearbeitung eingespart werden kann. Hierzu wird ein Modell beispielsweise aus speziell geeigneten Wachsen oder ähnlichen Thermoplasten oder deren Gemischen zum Beispiel im Spritzgussverfahren hergestellt. Die Modelle werden zunächst in Einfach- oder Mehrfachwerkzeugen gespritzt. Diese Werkzeuge bestehen in der Regel aus Aluminium oder Stahl. Je nach Gesamtstückzahl, Gestalt des Gussstückes und Art des Modellwerkstoffes wird das entsprechende Spritzwerkzeug gebaut.

Die Schaufelhülle kann mit dem Einsetzteil form- und/oder kraftschlüssig verbunden werden. Es ist bevorzugt, dass die Schaufelhülle mit dem Einsetzteil stoffschlüssig verbunden wird. Dabei werden unter stoffschlüssigen Verbinden alle Verbindungen verstanden, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Die Schaufelhülle wird bevorzugt mit dem Einsetzteil durch Löten verbunden. Beim Löten entsteht eine flüssige Phase durch Schmelzen eines Lotes (Schmelzlöten) oder durch Diffusion an Grenzflächen (Diffusionslöten). Dabei wird eine Oberflächenlegierung erzeugt, das Werkstück in der Tiefe aber nicht aufgeschmolzen: Die Liquidustemperatur der Grundwerkstoffe wird nicht erreicht. Nach dem Erstarren des Lotes ist wie beim Schweißen eine stoffschlüssige Verbindung hergestellt. Der Unterschied zum Schweißen liegt darin, dass beim Schweißen die Liquidustemperatur der zu verbindenden Komponenten erheblich überschritten wird und dass beim Löten die chemische Bindung zwar gleich sein kann, aber die Liquidustemperatur kaum oder nicht überschritten wird. So kann die Temperaturbelastung der Bauteile während der Fertigung reduziert werden und es werden unerwünschte Materialänderungen, wie Gefügemodifikationen, vermieden.

Es ist bevorzugt, dass die Schaufelhülle aus einem ersten Material und das Einsetzteil aus einem zweiten Material gefertigt sind, wobei der Wärmeausdehnungskoeffizient des ersten Materials im Wesentlichen dem Wärmeausdehnungskoeffizienten des zweiten Materials entspricht. Beispielsweise kann der Wärmeausdehnungskoeffizient einen Wert von 13,0 µm/(m*K) aufweisen. Dabei werden unter im Wesentlichen entsprechend Abweichungen von 5% verstanden. So werden thermisch induzierte Spannungen vermieden bzw. reduziert.

Es ist bevorzugt, dass die Schaufelhülle aus einem ersten Material und das Einsetzteil aus einem zweiten Material gefertigt sind, wobei die Wärmeleitfähigkeit des ersten Materials gleich oder größer als die Wärmeleitfähigkeit des zweiten Materials ist. Die Wärmeleitfähigkeit kann beispielsweise einen Wert von 11,2 W/(m*K) aufweisen. So wird eine Erwärmung des zweiten Materials vermieden.

Es ist bevorzugt, dass die Schaufelhülle aus einem ersten Material und das Einsetzteil aus einem zweiten Material gefertigt sind, wobei die Temperaturfestigkeit des ersten Materials im Wesentlichen der Temperaturfestigkeit des zweiten Materials entspricht. Die Temperaturfestigkeit kann in einem Bereich von 700°C bis 950°C liegen. Dabei werden unter im Wesentlichen entsprechend Abweichungen von 5% verstanden. So werden thermische Schäden vermieden.

Ferner gehören zur Erfindung eine Turbinenschaufel und eine Turbine mit einer derartigen Turbinenschaufel.

Im Folgenden wird eine bevorzugte Ausführungsform des erfindungsgemäßen Verfahrens anhand der beigefügten schematischen Zeichnung erläutert. Es zeigt:

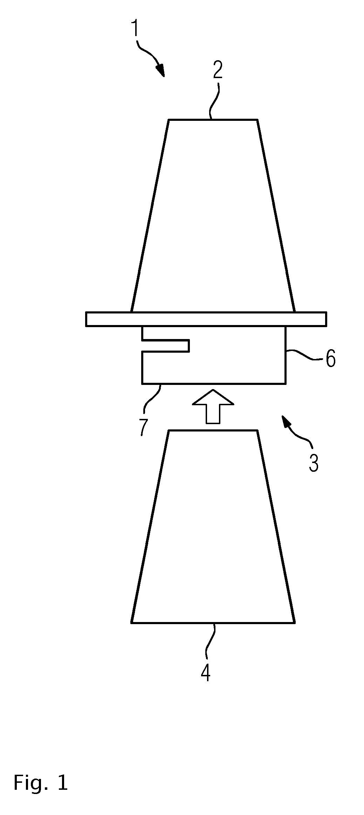

Figur 1 ein Ausführungsbeispiel einer Turbinenschaufel in Explosionsdarstellung.

Wie es aus Figur 1 ersichtlich ist, ist eine Turbinenschaufel 1 als eine Hohlschaufel ausgebildet. Bei der Turbinenschaufel 1 kann es sich um eine Leitschaufel oder eine Laufschaufel handeln. Die Turbinenschaufel 1 weist eine Schaufelhülle 2, einen Aufnahmeraum 3, der im Inneren der Turbinenschaufel 1 angeordnet ist und von der Schaufelhülle 2 begrenzt ist, und einen Schaufelfuß 6 auf. Der Aufnahmeraum 3 ist durch eine Zugangsöffnung 7 zugänglich, die an der Unterseite des Schaufelfußes 6 angeordnet ist. Durch die Zugangsöffnung 7 kann ein Einsetzteil 4 mit Kühlkanälen für ein Kühlmittel, wie beispielsweise Kühlluft, in den Aufnahmeraum 3 eingeführt werden.

Das Einsetzteil 4 ist ein mittels 3D-Druck, beispielsweise mittels selektivem Laserschmelzen oder Elektronenstrahlschmelzen oder selektivem Lasersintern gefertigtes Metall-Bauteil.

Das Material, aus dem das Einsetzteil gefertigt ist, weist einen Wärmeausdehnungskoeffizienten auf, der im Wesentlichen dem Wärmeausdehnungskoeffizienten des Materials entspricht, aus dem die Schaufelhülle 2 gefertigt ist. Beispielsweise kann der Wärmeausdehnungskoeffizient einen Wert von 13,0 µm/(m*K) aufweisen.

Als Material für das Einsetzteil wird ferner ein Material gewählt, dessen Wärmeleitfähigkeit beispielsweise einen Wert von 11,2 W/(m*K) aufweist. Somit ist die Wärmeleitfähigkeit des Materials der Schaufelhülle 2 zumindest gleich groß wie die Wärmeleitfähigkeit des Materials, aus dem das Einsetzteil 4 gefertigt ist.

Des Weiteren wird als Material für das Einsetzteil 4 ein Material gewählt, dessen Temperaturfestigkeit in einem Bereich von 700°C bis 950°C liegt und damit der Temperaturfestigkeit des Materials entspricht, aus dem die Schaufelhülle 2 gefertigt ist.

Nachdem die Schaufelhülle 1, die beispielsweise mittels Feinguss hergestellt werden kann, und das Einsetzteil 4 getrennt voneinander gefertigt wurden, wird in einem weiteren Schritt das Einsetzbauteil 4 durch die Zugangsöffnung 7 in den Aufnahmeraum 3 in Pfeilrichtung, die in Richtung zu der Schaufelspitze der Turbinenschaufel 1 hin gerichtet ist, eingeführt und dann wird das Einsetzbauteil 4 mit der Schaufelhülle 2 verbunden. Dies erfolgt im vorliegenden Ausführungsbeispiel durch das Bilden einer stoffschlüssigen Verbindung mittels Löten. So kann zuerst das Einsetzteil 4 mit der gewünschten Komplexität hergestellt und dann in die vorgefertigte Turbinenschaufel eingesetzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Turbinenschaufel (1), mit den Schritten:
Herstellen einer Schaufelhülle (2) der Turbinenschaufel (1), wobei die Schaufelhülle (2) einen Aufnahmeraum (3) der Turbinenschaufel (1) begrenzt,
Herstellen eines Einsetzteils (4) mit Kühlkanälen mittels additiver Fertigung, und
Einsetzen des Einsetzteils (4) in den Aufnahmeraum (3) und Verbinden des Einsetzteils (4) mit der Schaufelhülle (2).

2. Verfahren gemäß Anspruch 1, wobei die Schaufelhülle (2) mittels eines Gussverfahrens, insbesondere mittels Feinguss, hergestellt wird.

3. Verfahren gemäß Anspruch 1 oder 2,
wobei die Schaufelhülle (2) mit dem Einsetzteil (4) stoffschlüssig verbunden wird.

4. Verfahren gemäß Anspruch 3,
wobei die Schaufelhülle (2) mit dem Einsetzteil (4) durch Löten verbunden wird.

5. Verfahren gemäß einem der Ansprüche 1 bis 4,
wobei die Schaufelhülle (2) aus einem ersten Material und das Einsetzteil (4) aus einem zweiten Material gefertigt werden, wobei der Wärmeausdehnungskoeffizient des ersten Materials im Wesentlichen dem Wärmeausdehnungskoeffizienten des zweiten Materials entspricht.

6. Verfahren gemäß einem der Ansprüche 1 bis 5,
wobei die Schaufelhülle (2) aus einem ersten Material und das Einsetzteil (4) aus einem zweiten Material gefertigt werden, wobei die Wärmeleitfähigkeit des ersten Materials gleich oder größer als die Wärmeleitfähigkeit des zweiten Materials ist.

7. Verfahren gemäß einem der Ansprüche 1 bis 6,
wobei die Schaufelhülle (2) aus einem ersten Material und das Einsetzteil (4) aus einem zweiten Material gefertigt werden, wobei die Temperaturfestigkeit des ersten Materials im Wesentlichen der Temperaturfestigkeit des zweiten Materials entspricht.

8. Turbinenschaufel (1),
aufweisend eine Schaufelhülle (2), einen Aufnahmeraum (3), der von der Schaufelhülle (2) begrenzt ist, und ein in den Aufnahmeraum (3) eingesetztes Einsetzteil (4) mit Kühlkanälen, wobei das Einsetzteil (4) mittels additiver Fertigung gefertigt ist.

9. Turbinenschaufel (1) gemäß Anspruch 8,
wobei die Schaufelhülle (2) ein Gussteil, insbesondere ein Feingussteil, ist.

10. Turbinenschaufel (1) gemäß Anspruch 8 oder 9,
wobei die Schaufelhülle (2) mit dem Einsetzteil (4) stoffschlüssig verbunden ist.

11. Turbinenschaufel (1) gemäß Anspruch 10,
wobei die Schaufelhülle (2) mit dem Einsetzteil (4) durch Löten verbunden ist.

12. Turbinenschaufel (1) gemäß einem der Ansprüche 8 bis 11,
wobei die Schaufelhülle (2) aus einem ersten Material und das Einsetzteil (4) aus einem zweiten Material gefertigt sind, wobei der Wärmeausdehnungskoeffizient des ersten Materials im Wesentlichen dem Wärmeausdehnungskoeffizienten des zweiten Materials entspricht.

13. Turbinenschaufel (1) gemäß einem der Ansprüche 8 bis 12,
wobei die Schaufelhülle (2) aus einem ersten Material und das Einsetzteil (4) aus einem zweiten Material gefertigt sind, wobei die Wärmeleitfähigkeit des ersten Materials gleich oder größer als die Wärmeleitfähigkeit des zweiten Materials ist.

14. Turbinenschaufel (1) gemäß einem der Ansprüche 8 bis 13,
wobei die Schaufelhülle (2) aus einem ersten Material und das Einsetzteil (4) aus einem zweiten Material gefertigt sind, wobei die Temperaturfestigkeit des ersten Materials im Wesentlichen der Temperaturfestigkeit des zweiten Materials entspricht.

15. Turbine mit einer Turbinenschaufel (1) nach einem der Ansprüche 8 bis 14.
